# EUROPEAN PATENT SPECIFICATION

(11) **EP 3 139 803 B1**
(45) Date of publication and mention of the grant of the patent: **07.03.2018**
(21) Application number: 14732027.9
(22) Date of filing: 09.05.2014
(51) Int. Cl.: B65D 81/20, A47J 47/10

(54) **CONTAINER FOR DELAYING SPOILAGE OF A CONSUMABLE PRODUCT AND METHODS FOR USING THE CONTAINER**
BEHÄLTER ZUR VERZÖGERUNG DES VERDERBENS VON VERZEHRBAREN PRODUKTEN UND VERFAHREN ZUR VERWENDUNG DES BEHÄLTERS
RÉCIPIENT POUR RETARDER L'ALTÉRATION DE PRODUIT CONSOMMABLE, ET PROCÉDÉS D'UTILISATION DU RÉCIPIENT

(43) Date of publication of application: 15.03.2017
(73) Proprietor: VacuVita Holding B.V., 2289 CX Rijswijk (NL)
(72) Inventor: BOKMA DE BOER, Bauke Jan, NL- 2289 CX Rijswijk (NL)
(74) Representative: V.O.
(86) International application number: PCT/NL2014/050294
(87) International publication number: WO 2015/170965

(56) References cited:
- WO-A1-99/21763
- KR-U- 20080 001 523
- KR-U- 20080 003 605
- US-A- 5 946 919

## Description

### TECHNICAL FIELD AND BACKGROUND

The present disclosure relates to a container for delaying spoilage of a consumable product by means of a low pressure environment. The disclosure further relates to methods for using the container.

In the consumer market, spoilage of consumable products, such as food, is typically delayed or prevented by means of refrigeration. A notable advantage of a house hold refrigerator is that the food product stored therein is easily accessible. However, a disadvantage can be that the low temperature is not always desired for storing certain products and/or for consuming the product, e.g. bread or fruit.

Another way of delaying spoilage of a consumable product is by means of a low pressure environment, also referred to as vacuum storage. Typically the process comprises storing a product inside a compartment that is vacuumed by a pump. Advantageously, vacuum storage is not limited to low temperature conditions. Furthermore, vacuum storage may provide a relatively low energy consumption, especially once the low pressure environment is established. Despite these possible advantages, use of vacuum storage for maintaining consumable products has hitherto not been widely adopted. This is likely due to the limitations and cumbersome processes typically involved with vacuum storing the product.

In one example, a vacuum pump is integrated in a container together with internal storage compartment. Advantageously, by integrating the pump in the container, the cumbersome process of manually connecting the storage compartment each time a product is stored, can be avoided. Disadvantageously, by linking the storage compartment to the pump, transport of the stored product is limited.

In another example, the vacuum pump is part of a separate device connectable to an external storage compartment. Advantageously, by using an external storage compartment separable from the pump, the stored product can be easily transported. The external compartment may even be stored in a refrigerator. Disadvantageously, by providing an external storage compartment, it can be more cumbersome to connect a pump each time a product is stored. Document KR 2008 0001523 U discloses a container for delaying spoilage of a consumable product by means of a low pressure environment according to the preamble of claim 1. There is a need for a container and method that obviates at least one of the above-mentioned disadvantages while maintaining the advantages.

### SUMMARY

A first aspect of the present disclosure provides a container for delaying spoilage of a consumable product by means of a low pressure environment, the container comprising an internal compartment for storing the product inside; a vacuum pump comprising an inlet, wherein the pump is arranged for lowering a pressure at the inlet below an ambient pressure of an external surroundings of the container; a connection port accessible from outside the container for connecting an external compartment of an external container; a valve system comprising a first valve in a duct between the inlet of the vacuum pump and the internal compartment, and a second valve in a duct between the inlet of the vacuum pump and the connection port; and a controller arranged to control the vacuum pump and valve system, wherein the controller is programmed to selectively operate in one of a plurality of different modes, the modes comprising an internal vacuum mode for lowering a pressure inside the internal compartment until a target internal storage pressure is reached; and an external vacuum mode for lowering a pressure inside the external compartment until a target external storage pressure is reached; wherein the target external storage pressure is further below the ambient pressure than the target internal storage pressure.

The inventors recognize that there actually exist different needs for the storage of consumables: one need is keeping fresh frequently accessed consumables; another need is long term storage of consumables that are accessed infrequently or only once; yet another need is transport of consumables while keeping them fresh. By providing a container with a pump that can both vacuum an internal compartment of the container as well as an external compartment that can be separated from the pump, the advantages of either system can be selectively obtained depending on the need. It will be appreciated that the internal compartment is particularly suitable for keeping fresh frequently accessed consumables because it is not necessary to connect a vacuum pump each time the consumable is accessed. It will furthermore be appreciated that the external compartment is particularly suitable for long time storage of consumables because the pump need not be frequently connected anyway, e.g. only once because the product is consumed after access. Similarly, when transporting consumables to a remote location, it is typically not necessary to again store the product afterwards.

The inventors further recognize that frequently accessed consumables are more quickly consumed than consumables that are kept in long term storage. Accordingly it is found advantageous to provide an internal storage pressure for frequently accessed consumables that need not be at such a high vacuum level as the external storage pressure for keeping consumables in long term storage. Particularly, the lower vacuum level is found to be sufficient because the frequently accessed product is likely to be consumed before spoilage anyway. Furthermore the lower vacuum level can be more energy efficient, especially when the product is frequently accessed and the vacuum level has to be restored each time. Furthermore because the vacuum level is relatively low, the vacuum pump does not have to work at high capacity, and accordingly operate in a silent manner without causing disturbance to the user. Furthermore, because the pressure difference is relative small, the material of the container may experience smaller forces, e.g. the stiffness requirements of the container can be lower, which can be especially beneficial for a larger container. Furthermore, by using lighter materials and/or less material to make the container sufficiently stiff, the container as a whole can be lighter and/or less expensive to fabricate. Furthermore, because the vacuum level is lower, it takes less time to pressurize the internal compartment when accessing the product therein. Furthermore, because the internal storage compartment is kept connected to the pump, the pressure therein can be adjusted when needed, e.g. when the vacuum leaks. On the other hand, the external storage compartment is separated from the pump and therefore it is found desirable to keep this at a considerably higher vacuum level, to compensate possible loss of vacuum over time. Furthermore, the higher vacuum level can prevent spoilage of the product also for a longer time than the lower vacuum level. Advantageously, by providing separate valves leading to either the internal or external compartments, a single pump can be used. Because one valve can be open and the other one closed, the pressures of the two containers can be different. For these and other reasons, a more versatile container is obtained that can be advantageously used for different needs.

The inventors find that by providing a target internal storage pressure between 2 to 30 kPa , preferably between 5 to 20 kPa, more preferably between 5 to 10 kPa below ambient pressure (or between 70 to 98 kPa, preferably between 80 to 95 kPa, more preferably between 90 to 95 kPa absolute pressure), this relatively low vacuum can be sufficient to substantially delay spoilage of typical frequently accessed consumables such as bread at continuous low energy consumption. The inventors find that by providing a target external storage pressure between 30 to 90 kPa, preferably between 40 to 90 kPa, more preferably between 50 to 75 kPa below ambient pressure (or between 10 to 70 kPa, preferably between 10 to 60 kPa, more preferably between 25 to 50 kPa absolute pressure), this relatively high vacuum can prevent spoilage of consumables for a considerately longer period, and yet still with low energy consumption because the vacuum only has to be applied once.

The inlet of the pump can be pressurized e.g. by means of opening the second valve. Alternatively of in addition, a third valve can be provided between the external surroundings and the inlet of the pump independent from the external connection. For example, the second or third valve can be momentarily opened before switching on the vacuum pump to make it easier for the pump to provide a first stroke (less force needed than under vacuum conditions). Particularly when switching from a high vacuum mode to a low vacuum mode it can be advantageous to raise the pressure at the inlet before starting the vacuum pump.

To reach the target pressure, the instant pressure can be measured e.g. by one or more pressure sensors, for example at the inlet of the pump or in a compartment. Advantageously a single pressure sensor can be used at the inlet of the pump to measure either the pressure in the internal or the external compartments, depending on the setting of the valves. Furthermore, by provision of the third valve between the inlet of the pump and external surroundings, also the ambient pressure can be measured by the same pressure sensor. For example, the first and second valves can be closed and the third valve opened to measure the ambient pressure. Furthermore, by measuring the ambient pressure, optionally a pressure in the internal or external compartments can be set relative to the ambient pressure. Alternatively or in addition to using a pressure sensor, the target pressure can be determined by providing a known pump power for a known amount of time. For example, the pump power and/or time can be set higher in the external vacuum mode when vacuuming an external compartment than in the internal vacuum mode when vacuuming the internal compartment. In this way it can be inferred that the target external storage pressure is further below the ambient pressure than the target internal storage pressure. There can also be more than two modes, e.g. for vacuuming different types of containers.

By providing a cover to enclose the internal compartment, it can be relatively easy to access said compartment. By providing a sensor that can detect when the cover is closed the pump may automatically initiate the vacuuming of the internal compartment. By automatically initiating the vacuuming, it can be less cumbersome for a user to frequently access the internal compartment. Similarly, by providing a connection detector for detecting connection of the external compartment, the pump may automatically initiate vacuuming of the external compartment.

It will be appreciated that there can be different needs for different types of external containers. For example, an external container can be rigid or flexible (e.g. a bag). For example, the external container can be used for storage, transport, or marinating a food product. Accordingly, a vacuum mode can be adjusted depending on the type and/or use of the external container. The external vacuum mode can be selected manually or automatically. For example the external vacuum mode can be dependent on a mode signal received from the external compartment and/or connector. The connector can be integrated in one of the containers or formed by a separate piece, e.g. hose. The connection detector can optionally be provided with a sensor ability to distinguish between different types of connections, e.g. different types of connectors and/or different types of external containers which may be directly detectable and/or via a separate or integrated connector, or otherwise, e.g. wireless. For example, different connectors can be distinguished by their shape or by other means such as electronic identification, e.g. RFID. In one embodiment, different connector shapes activate different sensors at the connection port. Different connectors can be used to automatically initiate different modes of operation, e.g. a different setting for the pump capacity and/or pump duration and/or target pressure. By providing unique connectors that are detectable by the system, a protocol can be automatically adapted to the external container associated with the said connector without requiring user interaction. Alternatively or in addition, the external container provides a distinct signal for selecting a mode. For example, the vacuuming of a rigid external container can use a different connector and protocol than the vacuuming of a flexible external container, e.g. bag. Preferably, a single connection port is provided to accommodate different connector types. In this way, the valve system can be simplified while still providing the option to handle different containers. Alternatively, multiple connection ports art provided for different connectors. Also other combinations are possible

The pump may initiate directly and/or after a further user interaction, e.g. to confirm that indeed the external compartment is connected and/or confirm a specific protocol. By providing a user interface that only becomes accessible after a connection is detected, the interface can be simpler. For example, the user interface may comprise a light that activates when a connection is detected. By providing a touch sensitive surface with a backlight, the interface can be completely hidden from the user until the connection is detected. In this way a simple interface is obtained that minimally distracts the user.

The internal compartment can be pressurized for example by opening the first and second valves (e.g. when no external compartment is connected). Alternatively or in addition, the third valve can be opened which can be independent from the connection to the external compartment Alternatively or in addition, an extra valve can be provided between the internal compartment and the external surroundings for pressurizing the inside of the internal compartment The extra valve can be separate and independent from the other valves for quickly pressurizing the internal compartment e.g. by a relatively large diameter of the valve, to quickly access its contents. For example, the valve to pressurize the internal compartment can be automatically opened e.g. when a user activates an opening mechanism such as a button or sensor. Advantageously, the opening mechanism can also be used to automatically stop the pump, if necessary.

It will be appreciated that a single pump can be used for either vacuuming the internal compartment or the external compartment. By providing a lower pump capacity in the vacuuming of the internal compartment, the pump may produce less noise and/or use less power, while anyway providing sufficient vacuum for the internal compartment. When connecting an external compartment, the noise may be less relevant since it is only for a short period and the external compartment can be more quickly vacuumed and/or a higher vacuum can be established by using a higher pump capacity. Typically, when the external compartment is smaller (i.e. having smaller volume) than the internal compartment, the lowering of the pressure of the external compartment can be faster. While vacuuming the internal compartment, the pump capacity can be switched from an initially high capacity e.g. after closing the internal compartment, to a subsequent lower capacity, e.g. for reaching the desired target pressure or determined amount of time. By initially quickly lowering the pressure in the internal compartment, the relative pressure difference can be used e.g. to keep the cover in place and improve sealing of the compartment. After the compartment is sufficiently sealed, the pressure in the internal compartment can be further lowered without substantial vacuum leakage. After a target pressure is reached, this pressure can e.g. be periodically monitored and maintained. By providing a feedback signal when switching between the initial phase to the subsequent phase, a user can be informed that the pressure has dropped sufficiently to hold the cover shut. Advantageously, providing the feedback signal at an early stage in the vacuum process may improve user experience of the responsiveness of the device.

A second aspect of the present disclosure provides a method for delaying spoilage of a consumable product by means of a low pressure environment, the method comprising providing a container according to the first aspect; storing the product in the internal compartment of the container; and activating the controller in the internal vacuum mode for lowering a pressure inside the internal compartment until the internal storage pressure is reached. As noted above, use of the internal compartment has many benefits for frequently accessed consumables.

A third aspect of the present disclosure provides a method for delaying spoilage of a consumable product by means of a low pressure environment, the method comprising providing a container according to the first aspect; providing a further external container; storing the product in a compartment of the external container; connecting the external container to the connection port of the first container; and activating the controller in the external vacuum mode for lowering a pressure inside the external compartment until the external storage pressure is reached. As noted above, use of the external compartment has many benefits for long term storage of consumables and/or transport of the consumables.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 schematically shows a perspective view of an embodiment of a container;
FIG 2 schematically shows an embodiment for the pneumatic components of the container;
FIG 3A schematically shows an example control scheme of the container operating in an internal vacuum mode;
FIG 3B schematically shows an example control scheme of the container operating in an external vacuum mode;
FIG 3C schematically shows an example control scheme of the container operating in a second external vacuum mode;
FIG 4A schematically shows an example control scheme of another mode;
FIG 4B schematically shows a control scheme for closing the container;
FIG 4C schematically shows a control scheme for opening the container;
FIG 5 schematically shows comparative graphs of the time dependent pressure in the internal compartment versus the external compartment
FIG 6A and 6B schematically show cross-section views of an embodiment of the container.

### DESCRIPTION OF EMBODIMENTS

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. The description of the exemplary embodiments is intended to be read in connection with the accompanying drawings, which are to be considered part of the entire written description. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

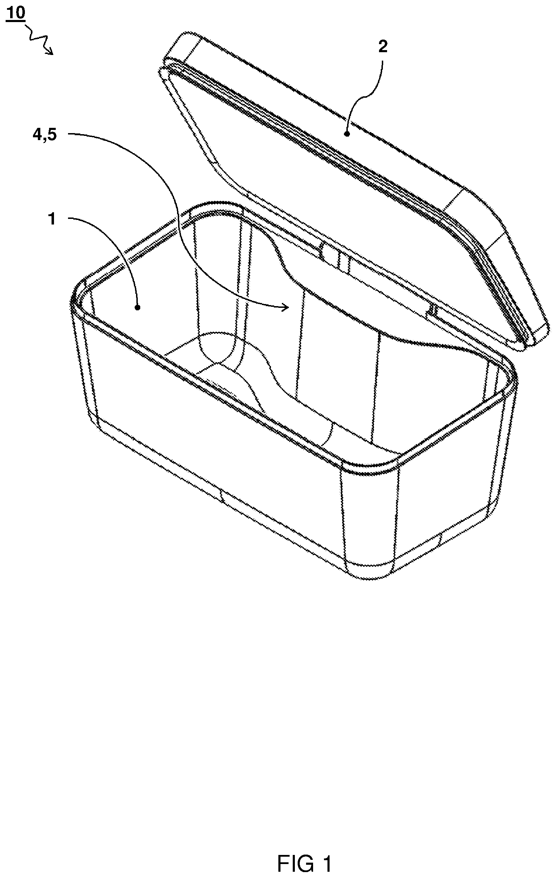

FIG 1 schematically shows a perspective view of an embodiment of a container 10 for delaying spoilage of a consumable product by means of a low pressure environment. The container 10 comprises an internal compartment 1 for storing the product inside. In the embodiment, the container 10 further comprises a cover 2 for closing the compartment 1. To provide vacuuming of the compartment 1, the container may comprise a valve system 4 and a vacuum pump 5 (hidden from view here in the back compartment). Advantageously, the pump and valves may also be used for vacuuming an external compartment (not shown here). Further details of the pneumatic components are provided in the following.

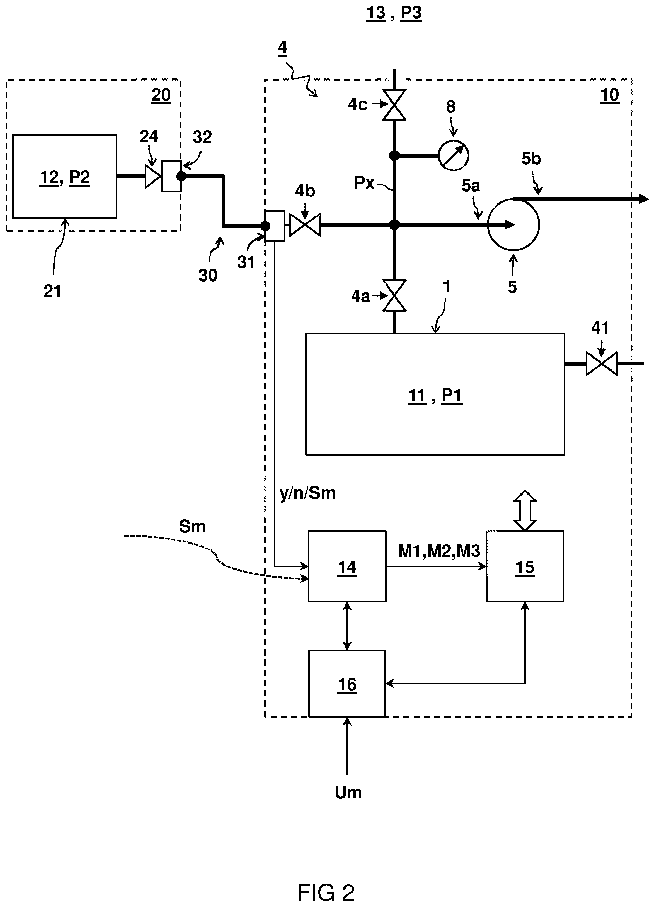

FIG 2 schematically shows pneumatic components of a main container 10 connected to an external container 20.

The container 10 comprises an internal compartment 1 for storing the product inside 11. The container 10 comprises a vacuum pump 5 comprising an inlet 5a and outlet 5b. The pump is arranged for lowering a pressure Px at the inlet 5a below an ambient pressure P3 of an external surroundings 13 of the container 10. The container 10 comprises a connection port 31 accessible from outside the container 10 for connecting an external compartment 21 of the external container 20. The container 10 comprises a valve system 4. The valve system 4 comprises a first valve 4a in a duct between the inlet 5a of the vacuum pump 5 and the internal compartment 1. The valve system 4 further comprises a second valve 4b in a duct between the inlet 5a of the vacuum pump 5 and the connection port 31. The container 10 comprises a controller 15. The controller 15 is arranged to control the vacuum pump 5 and valve system 4 (schematically indicated by the white arrow). The controller is programmed to selectively operate in one of a plurality of different modes. In an internal vacuum mode M1 the controller controls the valve system 4 and vacuum pump 5 for lowering a pressure inside 11 the internal compartment 1 until a target internal storage pressure P1 is reached. In an external vacuum mode M2, the controller controls the valve system 4 and vacuum pump 5 for lowering a pressure inside 12 the external compartment 21 until a target external storage pressure P2 is reached. Advantageously, the target external storage pressure P2 may be further below the ambient pressure P3 than the target internal storage pressure P1. In other words, the external compartment 12 may be kept at a lower pressure than the internal compartment 11.

The controller 15 may include micro-processors, central processing units (CPUs), digital signal processors (DSPs), or any other processor(s) or controller(s) such as analog electrical circuits that perform the same functions, and employ electronic techniques and architecture. Any type of processor may be used such as dedicated or shared one. The processor is typically under software control for example, and has or communicates with a memory that stores the software and other data such as parameters, user preferences (e.g. pressure ranges), and/or equipment settings. The memory may be any suitable type of memory where data are stored. The memory may also store application data as well as other desired data accessible by the controller/processor for configuring it to perform operational acts in accordance with the present systems and methods. One or more of the describe components such as sensors, processors, etc., may all or partly be a portion of a single (fully or partially) integrated unit. Alternatively, instead of being integrated in a single device, parts may be distributed between multiple devices. Apart from the components shown, also other components can be present optionally linked to the controller 15. Alternative or in addition to the controller 15, some or all components can be controlled by other means, e.g. mechanically or by analog electrical circuits. Alternative or in addition multiple controllers/circuits can be used for different components. The modes may e.g. comprise specific settings of the valve system and/or pump. For example, the modes can be stored in a memory that can be integrated or couple to the controller.

In one embodiment, the connector 30 is plugged in between a connection port 31 of the main container 10 and a connection port 32 of the external container 20. In one embodiment, the external container 20 is directly connected, e.g. stacked onto, the main container 10, without separate connector hose therein between. In other words, the connector 30 can be a direct connection integrated into one or more of the main and/or external containers. In one embodiment, the connection port 32 of the external container 20 comprises a one way valve 24, arranged for maintaining a low pressure P2 in the inside 12 of the external compartment 21, also after the connector 30 is unplugged.

In one embodiment, the connection port 31 comprises a connection detector for detecting presence or absence of a connection to the connection port 31 and/or second valve 4b, e.g. by the connector 30. In a further embodiment, the controller 15 is e.g. programmed for closing the first valve 4a and opening the second valve 4b after detecting connection of the external compartment and initiating the vacuum pump 5 in the external vacuum mode.

In one embodiment, the controller 15 is programmed for automatically initiating the external vacuum mode M2 when the presence ("y") of a connection 30 is detected (e.g. separate or integrated connector). In another or further embodiment, the controller 15 is programmed for automatically initiating the internal vacuum mode M1 when the absence ("n") of a connection 30 is detected (e.g. separate or integrated connector). The detection can also be more specific, e.g. a mode selection signal "Sm" for selecting a specific mode.

In one embodiment, the container 10 comprises a mode receiver 14. The mode receiver 14 can be operatively connected and/or integrated with the controller 15. The mode receiver 14 can also be integrated in the connection port 31. In one embodiment, the mode receiver 14 is arranged for receiving a mode signal "Sm". The mode signal Sm can originate directly or indirectly from the external container 20 and/or connector 30. Optionally the mode signal "Sm" can be transferred via the connection port 31. Alternatively or in addition, the mode signal can be sent in other ways, e.g. wireless and/or via RFID. In a further embodiment, the controller 15 is programmed to selectively operate in one of a first external vacuum modes M2 or a second external vacuum mode M3 based on the received mode signal "Sm". For example the first and second external vacuum modes M2,M3 may be distinguished by one or more of a pump capacity, pump duration, intermittent pumping scheme and/or the target external storage pressure. For example, an intermittent pumping scheme, e.g. a varying and/or pulsating pressure in a compartment may be used for more quickly marinating a product in said compartment. In one embodiment, the mode signal is generated by selectively turning the connector 30 in the connection port 31. In this way, the user interface can be further simplified.

For example, the mode receiver 14 may detect presence of a wine bottle as the external container 20 and initiate an appropriate mode for external vacuuming. For example, when a bag is detected as the external container 20, different option may become available for vacuuming, e.g. accessible via a dynamic user interface. The choice of external vacuuming mode can thus be automatic, semi-automatic (e.g. with the option of manual override), or fully manual.

In one embodiment, the connection port 31 comprises a connection detector for determining a type of connector 30 coupled to connection port 31. For example, the connection detector may distinguish different types of compartments based on a recognition of the associated connector 30 and/or its position.

In one embodiment, the plurality of different modes comprises a second external vacuum mode M3 for lowering a pressure inside an external compartment. In one embodiment, the controller 15 is programmed to selectively operate in one of the external vacuum mode M2 or the second external vacuum mode M3 as a function of the type of connection 30, e.g. connector hose, direct connection, or from other variables associated with the connection, e.g. an angle of the connection.

In one embodiment, the container 10 comprises a dynamic user interface 16. The user interface 16 can be used for monitoring and/or manually controlling one or more of a pump capacity, pump duration, intermittent pumping scheme and/or the target external storage pressure of the external vacuum mode M2. In one embodiment, the user interface 16 is a dynamic user interface, i.e. wherein an appearance of the user interface can be changed. For example, the user interface may comprise a touch screen interface.

In one embodiment, the user interface (16) is arranged to automatically appear and/or activate when the presence "y" of a connection (30 is detected. In another or further embodiment, the user interface 16 is arranged automatically hide and/or deactivate when the absence "n" of a connection 30 is detected, e.g. from a connector hose or from a direct connection between the containers 10 and 20. In one embodiment, the appearance and disappearance of the user interface comprises a switching on and off, respectively, of a backlighting of the interface. It will be appreciated that the disappearance of the user interface when it is not needed (e.g. when no external container is connected) may simplify the interface. In one embodiment, the mode can only be influenced when the user interface is active/appears. In one embodiment, the appearance of the user interface 16 is dependent on the mode signal Sm. In one embodiment, the appearance of the user interface is dependent on the actual mode. The user interface may also appear and/or disappear and/or change appearance based on any other status of the main container and/or external container, e.g. based on the measured pressure. The user interface may also be partly or fully integrated in the connection port 31. For example, depending on a rotation of the connector 30 in the connection port 31, a user may select a different vacuum mode.

In one embodiment, the container 10 comprises a pressure sensor 8 for measuring the pressure Px at the inlet 5a of the pump 5 and providing the measured pressure Px to the controller 15. In one embodiment, the valve system 4 comprises a third valve 4c between the external surroundings 13 and the inlet 5a of the pump 5. For example, by provision of the third valve between the inlet of the pump and external surroundings, also the ambient pressure P3 can be measured by the same pressure sensor 8. Alternatively or in addition, the second valve 4b may be opened in case no external compartment is connected to the connection port 31.

In one embodiment, the controller 15 is programmed for momentarily opening the third valve 4c for raising the pressure Px at the inlet 5a of the vacuum pump 5 when switching from the external vacuum mode M2 to internal vacuum mode M1. This may facilitate initiating the pump in the internal vacuum mode.

In one embodiment, the container 10 comprises a fourth valve 41 between the internal compartment 1 and the external surroundings 13. The fourth valve 41 can e.g. be used for pressurizing the inside 11 of the internal compartment 1 to the ambient pressure P3. In this way external access to the inside 11 of the internal compartment 1 can be quickly initiated.

It will be appreciated that the present disclosure provides various methods for delaying spoilage of consumable products by means of low pressure environment. For example, a first method comprises providing a container 10 as described herein and storing the product in the internal compartment 11 of the container 10. The first method further comprises activating the internal vacuum mode M1 for lowering a pressure inside 11 the internal compartment 1 until the internal storage pressure P1 is reached. For example, a second method comprises providing a container 10 as described herein and providing a further external container 20. The second method further comprises storing the product in a compartment 12 of the external container 20, connecting the external container 20 to the connection port 31 of the first container 10, and activating the controller 15 in the external vacuum mode M2 for lowering a pressure inside 12 the external compartment 21 until the external storage pressure P2 is reached.

In one embodiment, the container 10 comprises a user interface (not shown) for initiating the vacuum pump 5 in the external vacuum mode M2. In a further embodiment, the interface comprises a touch sensitive surface with a backlight. In a further embodiment, the backlight only activates after the connection detector detects connection of the external compartment 21.

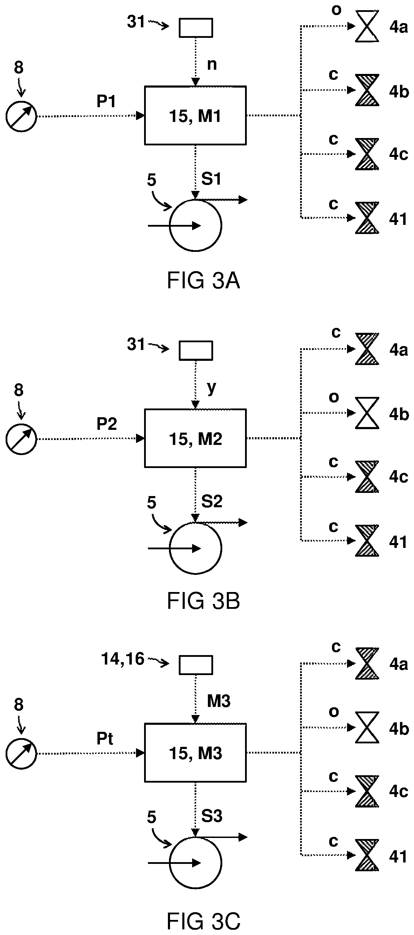

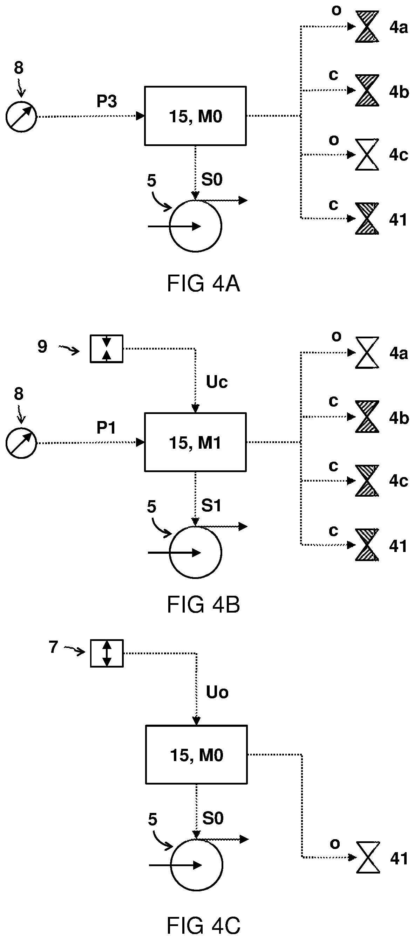

FIGs 3A-3C and FIGs 4A-4C schematically show example control schemes of different modes of operation of the container 10 shown in FIG 2. The white and hatched fillings of the valves indicate an open (o) or closed (c) condition, respectively.

FIG 3A shows an example control scheme of the internal vacuum mode M1 for vacuuming the internal compartment. This mode is typically activated when there is no connection detected to the connection port 31 ("n") and the internal compartment is closed. In this mode, the controller 15 is programmed for closing the second valve 4b and third valve 4c (if present) and opening the first valve 4a. The pump 5 is set to operate at a first pump setting S1. In this mode, the pressure sensor 8 is arranged to measure the internal storage pressure P1.

FIG 3B shows an example control scheme of the external vacuum mode M2 for vacuuming an external compartment. This mode is activated when a connection is detected ("y") to the connection port 31. In this mode, the controller 15 is programmed for closing the first valve 4a and third valve 4c (if present) and opening the second valve 4b. The pump 5 is set to operate at a second pump setting S2. Optionally, the pressure sensor 8 can be arranged to measure the external storage pressure P2.

In one embodiment, the vacuum pump 5 is set to use a lower pump capacity S1 in the internal vacuum mode M1 than the pump capacity S2 in the external vacuum mode M2. Alternatively or in addition, the vacuum pump 5 is set to operate for a shorter time period in the external vacuum mode M2 than in the internal vacuum mode M1. Advantageously, by working at a higher pump capacity and/or shorter time period for vacuuming the external compartment, a user does not have to wait a long period. At the same time, the pump can be more quiet when vacuuming the internal compartment, e.g. without disturbance to the user during daily operation.

FIG 3C shows an example control scheme of the mode M3 for vacuuming an external compartment. This mode is activated e.g. by the mode receiver 14 based on a mode signal as described above. For example, the connection port comprises a mode receiver 14, capable of distinguishing different connectors and/or different external containers. Alternatively or in addition, the mode M3 may be selectable via a user interface 16 as described above.

Similar to the first external vacuum mode M2, in the second external vacuum mode M3, the controller 15 is programmed for closing the first valve 4a and third valve 4c (if present) and opening the second valve 4b. However, the second external vacuum mode M3 can differ from the external vacuum mode M2 by one or more of the target pressure Pt and/or the pump setting S3. For example a pump capacity and/or pump duration is different in the second external vacuum mode M3 than in the external vacuum mode M2. In this way, the system may accommodate different types of external containers via the same connection port 31.

FIG 4A shows an example control scheme of another mode M0. In this mode, the first valve 4a and second valve 4b are closed and the third valve 4c is opened. In this way an open connection is provided between the sensor 8 and the external surroundings. The mode can be used e.g. to measure the ambient pressure P3. In this mode, the pump 5 can optionally be set to low capacity or shut down (pump setting "S0").

In one embodiment, the controller 15 is programmed for calculating a pressure difference between the measured pressures P1,P2,P3. For example, the controller can cycle the opening and closing of the respective valves to measure each pressure using the same sensor 8.

FIG 4B shows an example control scheme wherein the container comprises a closure sensor 9 for detecting closure of the cover 2. In one embodiment, the controller 15 is programmed to automatically initiate the internal vacuum mode M1 when the closure of the cover 2 is detected by the closure sensor 9. Alternatively or in addition, the internal vacuum mode M1 can be activated if no external connection is detected to the connection port, e.g. according to FIG 3A. Also combinations are possible. For example, removal of a connector from the connection port may initiate the internal vacuum mode M1 if it is simultaneously detected that the cover is closed.

FIG 4C shows a control scheme wherein the container comprises an opening sensor 7 for detecting and/or initiating opening Uo of the cover 2. In one embodiment, the controller 15 is programmed to automatically stop the vacuum pump 5 and open the fourth valve 41 when the opening Uo of the cover 2 is detected and/or initiated by the opening sensor 7. The fourth valve 41 e.g. comprises a large throughput valve to quickly pressurize the internal container. When the opening of the cover is detected, the pump can be optionally shut down (S0)

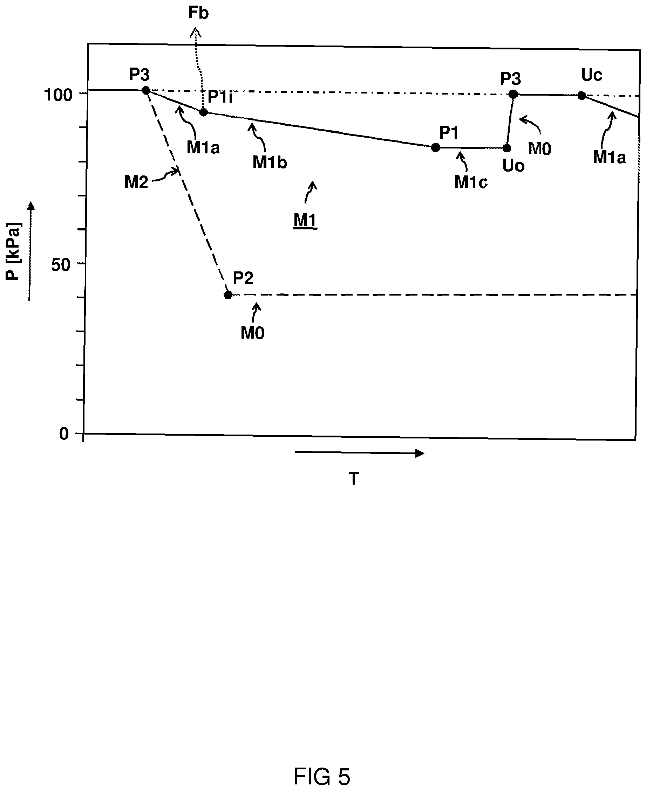

FIG 5 schematically shows comparative graphs of the time (T) dependent pressure (P) in the internal compartment (solid line) versus the external compartment (dashed line). The ambient pressure P3 is indicated by the dash-dotted line at about 100 kPa.

It will be noted that the target external storage pressure P2 is further below the ambient pressure P3 than the target internal storage pressure P1. To reach the said lower pressure P2 in a reasonable amount of time, in one embodiment, the vacuum pump 5 uses a higher pump capacity in the external vacuum mode M2 than in the internal vacuum mode M1.

In one embodiment, the internal vacuum mode M1 comprises an initial phase M1a for lowering the pressure in the compartment 1 from the ambient pressure P3 to an intermediate pressure P1i between the ambient pressure P3 and the target internal storage pressure P1. The internal vacuum mode M1 may further comprise a subsequent phase M1b for lowering the pressure from the intermediate pressure P1i to the target internal storage pressure P1. In a further embodiment, the vacuum pump 5 uses a higher pump capacity in the initial phase M1a than in the subsequent phase M1b.

In one embodiment, the container, comprises a feedback device for providing one or more of an audio or visual feedback signal Fb. In a further embodiment, the controller is programmed to activate the feedback device to provide the feedback signal Fb between the initial phase M1a and the subsequent phase M1b.

In one embodiment, upon reaching the target internal storage pressure P1, the controller is arranged to switch to a maintenance mode M1c wherein the pressure P1 is maintained within a predetermined pressure range. For example, the pressure in the internal compartment can be monitored and the pump switched on or off when the internal pressure exceeds upper and lower thresholds of the pressure range. In one embodiment, the pressure in the internal compartment can be quickly equalized with the ambient pressure P3 by providing an opening signal Uo, e.g. by activating an opening sensor. When the opening signal Uo is detected, e.g. a pressure valve between the internal compartment and the external surroundings can be opened. After again closing the internal compartment, a closing signal Uc can be provided that triggers activation of the internal vacuum mode to vacuum the internal compartment.

In one embodiment, upon reaching the target external storage pressure P2, the controller is arranged to switch the pump off (mode M0) and optionally provide a feedback signal. The external compartment can then be uncoupled from the main compartment while the external storage pressure is maintained in the external compartment, e.g. by a one way valve in the external container.

In one embodiment, the internal storage pressure (P1) is measured relative to the ambient pressure (P3) and the external storage pressure (P2) is measured as an absolute pressure. The external storage pressure can also be indirectly inferred e.g. from a pump capacity or time.

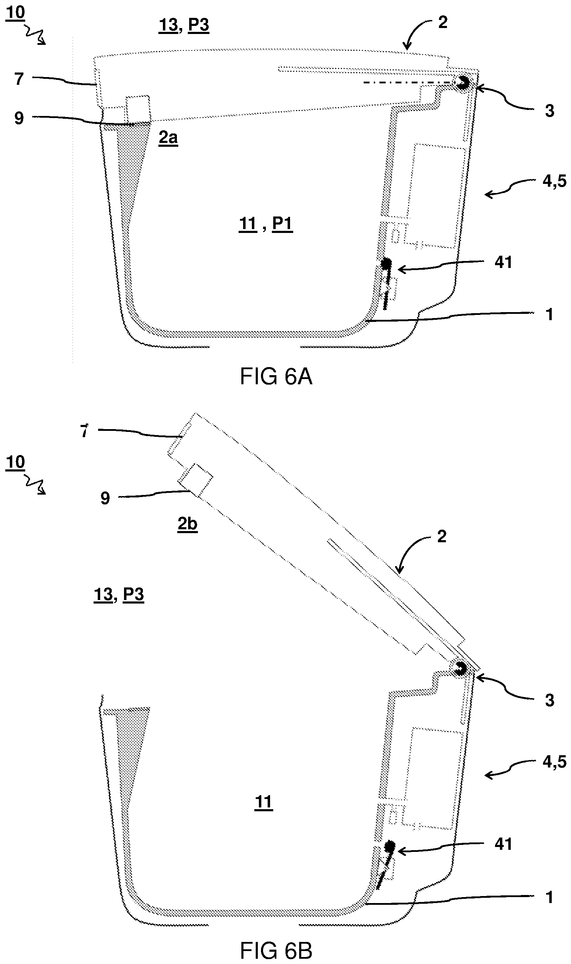

FIGs 6A and 6B schematically show cross-section views of an embodiment of the container. The general position of the valve system 4 and pump 5 is indicated without further detail.

In the embodiment, the container 10 comprises a cover 2 operable between a closed position 2a (FIG 6A) and an open position 2b (FIG 6B). In the closed position 2a, the cover 2 is arranged for hermetically sealing the product inside 11 the internal compartment 1 at the internal storage pressure P1 below the ambient pressure P3. In the open position 2b, the cover 2 is arranged for accessing the product inside 11 the internal compartment 1.

In one embodiment, the container 10 comprises a closure sensor 9 for detecting closure of the cover 2. In a further embodiment, a controller (not shown here) is programmed to automatically initiate the internal vacuum mode M1 when the closure of the cover 2 is detected by the closure sensor 9.

In one embodiment, the container 10 comprises an opening sensor 7 for detecting and/or initiating opening Uo of the cover 2. In a further embodiment, the controller is programmed to automatically stop the vacuum pump 5 and open the fourth valve 41 when the opening Uo of the cover 2 is detected and/or initiated by the opening sensor 7. The opening sensor can be an input sensor, e.g. a touch sensitive interface. A user may interact with the opening sensor 7 to pressurize the compartment 1 and open the container.

In the embodiment shown, the cover 2 is connected to the container by means of a hinge 3. Also other connections are possible, e.g. a sliding connection or no connection at all between the cover 2 and the rest of the container. It will be appreciated that the cover 2 may be held in place by the vacuum in the compartment 1. Alternative to the cover on the top of the container, the cover can also be placed elsewhere, e.g. the front when compartment 1 is an integral part of a kitchen drawer.

While example embodiments were shown for control schemes for delaying spoilage of a consumable product in internal and external compartments, also alternative ways may be envisaged by those skilled in the art having the benefit of the present disclosure for achieving a similar function and result. E.g. parts of the valve system may be combined or split up into one or more alternative components. Certain parts of valve system can be omitted or added. The various elements of the embodiments as discussed and shown offer certain advantages, such as convenient vacuum storage. Of course, it is to be appreciated that any one of the above embodiments or processes may be combined with one or more other embodiments or processes to provide even further improvements in finding and matching designs and advantages. For example, while the present systems can provide the benefit of an internal vacuum mode that differs from an external vacuum mode by the amount of pressure in the respective compartments, alternatively or in addition, also other variations can be envisaged between the internal and external compartments and/or between different types of external compartments. For example, in one embodiment, instead of a difference in pressure level between different compartments, a difference is provided in a pressure variation, e.g. an intermittent pumping scheme. Also other variations are possible e.g. a different pump capacity and/or pump duration. Furthermore, it is appreciated that this disclosure offers particular advantages to food products, and in general can be applied for any application wherein products are to be conveniently stored under various vacuum conditions.

While the present systems and methods have been described in particular detail with reference to specific exemplary embodiments thereof, it should also be appreciated that numerous modifications and alternative embodiments may be devised by those having ordinary skill in the art without departing from the scope of the present disclosure. For example, embodiments wherein devices or systems are disclosed to be arranged and/or constructed for performing a specified method or function inherently disclose the method or function as such and/or in combination with other disclosed embodiments of methods or systems. Furthermore, embodiments of methods are considered to inherently disclose their implementation in respective hardware, where possible, in combination with other disclosed embodiments of methods or systems. Furthermore, methods that can be embodied as program instructions, e.g. on a non-transient computer-readable storage medium, are considered inherently disclosed as such embodiment.

Finally, the above-discussion is intended to be merely illustrative of the present systems and/or methods and should not be construed as limiting the appended claims to any particular embodiment or group of embodiments. The specification and drawings are accordingly to be regarded in an illustrative manner and are not intended to limit the scope of the appended claims. In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage. In particular, all working combinations of the claims are considered inherently disclosed.

## Claims

1. Container (10) for delaying spoilage of a consumable product by means of a low pressure environment, the container (10) comprising
- an internal compartment (1) for storing the product inside (11);
- a vacuum pump (5) comprising an inlet (5a), wherein the pump is arranged for lowering a pressure (Px) at the inlet (5a) below an ambient pressure (P3) of an external surroundings (13) of the container (10);
- a connection port (31) accessible from outside the container (10) for connecting an external compartment (21) of an external container (20);
- a valve system (4) comprising
∘ a first valve (4a) in a duct between the inlet (5a) of the vacuum pump (5) and the internal compartment (1), and
∘ a second valve (4b) in a duct between the inlet (5a) of the vacuum pump (5) and the connection port (31); **characterised in that** it further comprises
- a controller (15) arranged to control the vacuum pump (5) and valve system (4), wherein the controller (15) is programmed to selectively operate in one of a plurality of different modes (M1,M2,M3), the modes comprising
∘ an internal vacuum mode (M1) for lowering a pressure inside (11) the internal compartment (1) until a target internal storage pressure (P 1) is reached; and
∘ an external vacuum mode (M2) for lowering a pressure inside (12) the external compartment (21) until a target external storage pressure (P2) is reached; wherein the target external storage pressure (P2) is further below the ambient pressure (P3) than the target internal storage pressure (P1).

2. Container (10) according to claim 1, wherein the connection port (31) comprises a connection detector for detecting a presence (y) or absence (n) of a connection (30) to the connection port (31), wherein the controller (15) is programmed for
- automatically initiating the external vacuum mode (M2) when the presence (y) of a connection (30) is detected; and/or
- automatically initiating the internal vacuum mode (M1) when the absence (n) of a connection (30) is detected.

3. Container (10) according to claim 1 or 2, wherein the connection port (31) comprises a connection detector for detecting a presence (y) or absence (n) of a connection (30) to the connection port (31), the container (10) further comprising an externally accessible dynamic user interface (16) for manually controlling one or more of a pump capacity, pump duration, intermittent pumping scheme and/or the target external storage pressure of the external vacuum mode (M2), wherein the user interface (16) is arranged to
- automatically appear when the presence (y) of a connection (30) is detected; and
- automatically hide when the absence (n) of a connection (30) is detected.

4. Container (10) according to any of the previous claims, further comprising a mode receiver (14) operatively connected to the controller (15) and arranged for receiving a mode signal (Sm) from the external container (20) and/or connector (30) and/or connection points (31,32) therein between, wherein the controller (15) is programmed to selectively operate in one of a first external vacuum modes (M2) or a second external vacuum mode (M3) based on the received mode signal (Sm), wherein the first and second external vacuum modes (M2,M3) are distinguished by one or more of a pump capacity, pump duration, intermittent pumping scheme and/or the target external storage pressure.

5. Container (10) according to any of the previous claims, wherein
- the target for the internal storage pressure (P 1) is between 2 to 30 kPa below the ambient pressure (P3) or between 70 to 98 kPa absolute pressure; and
- the target for the external storage pressure (P2) is between 30 to 90 kPa below ambient pressure (P3) or between 10 to 70 kPa absolute pressure.

6. Container (10) according to any of the previous claims, wherein the valve system (4) comprises a third valve (4c) between the external surroundings (13) and the inlet (5a) of the pump (5).

7. Container (10) according to claim 6, comprising a pressure sensor (8) for measuring the pressure (Px) at the inlet (5a) of the pump (5) and providing the measured pressure (Px) to the controller (15), wherein the controller (15) is programmed for
∘ closing the second valve (4b) and third valve (4c) and opening the first valve (4a) to measure the internal storage pressure (P1); and/or
∘ closing the first valve (4a) and third valve (4c) and opening the second valve (4b) to measure the external storage pressure (P2); and/or
∘ closing the first valve (4a) and second valve (4b) and opening the third valve (4c) to measure the ambient pressure (P3); and
- wherein the controller (15) is programmed for calculating a pressure difference between the measured pressures (P1,P2,P3).

8. Container (10) according to any of the previous claims, comprising a fourth valve (41) between the internal compartment (1) and the external surroundings (13) for pressurizing the inside (11) of the internal compartment (1) to the ambient pressure (P3) for initiating external access to the inside (11) of the internal compartment (1).

9. Container (10) according to any of the previous claims, comprising a cover (2) operable between
∘ a closed position (2a) for hermetically sealing the product inside (11) the internal compartment (1) at the internal storage pressure (P1) below the ambient pressure (P3), and
∘ an open position (2b) for accessing the product inside (11) the internal compartment (1); and
- a closure sensor (9) for detecting closure of the cover (2) wherein the controller is programmed to automatically initiate the internal vacuum mode (M1) when the closure of the cover (2) is detected by the closure sensor (9).

10. Container (10) according to claim 8 and 9, comprising an opening sensor (7) for detecting and/or initiating opening (Uo) of the cover (2), wherein the controller (15) is programmed to automatically stop the vacuum pump (5) and open the fourth valve (41) when the opening (Uo) of the cover (2) is detected and/or initiated by the opening sensor (7).

11. Container (10) according to any of the previous claims, wherein in the internal vacuum mode (M1), the vacuum pump (5) uses a lower pump capacity (S1) than in the external vacuum mode (M2).

12. Container (10) according to any of the previous claims, wherein the internal vacuum mode (M1) comprises
- an initial phase (M1a) for lowering the pressure in the compartment (1) from the ambient pressure (P3) to an intermediate pressure (P1i) between the ambient pressure (P3) and the target internal storage pressure (P1); and
- a subsequent phase (M1b) for lowering the pressure from the intermediate pressure (P1i) to the target internal storage pressure (P1), wherein the vacuum pump (5) uses a higher pump capacity in the initial phase (M1a) than in the subsequent phase (M1b).

13. Container (10) according to claim 12, comprising a feedback device for providing one or more of an audio or visual feedback signal, wherein the controller (15) is programmed to activate the feedback device to provide the feedback signal between the initial phase (M1a) and the subsequent phase (M1b).

14. Method for delaying spoilage of a consumable product by means of a low pressure environment, the method comprising
- providing a container (10) according to any of the claims 1 - 13;
- storing the product in the internal compartment (12) of the container (10); and
- activating the internal vacuum mode (M1) for lowering a pressure inside (11) the internal compartment (1) until the target internal storage pressure (P1) is reached.

15. Method for delaying spoilage of a consumable product by means of a low pressure environment, the method comprising
- providing a container (10) according to any of the claims 1 - 13;
- providing a further external container (20);
- storing the product in a compartment (12) of the external container (20);
- connecting the external container (20) to the connection port (31) of the first container (10); and
- activating the external vacuum mode (M2) for lowering a pressure inside (13) the external compartment (21) until the target external storage pressure (P2) is reached.

## Patentansprüche

1. Behälter (10) zur Verzögerung des Verderbens eines verzehrbaren Produkts mittels einer Niederdruckumgebung, der Behälter (10) umfassend
- ein Innenfach (1) zum Lagern des Produkts im Inneren (11);
- eine Vakuumpumpe (5), umfassend einen Einlass (5a), wobei die Pumpe angeordnet ist zum Senken eines Drucks (Px) am Einlass (5a) unter einen Umgebungsdruck (P3) einer externen Umgebung (13) des Behälters (10);
- einen Verbindungsanschluss (31), zugänglich von außerhalb des Behälters (10) zum Verbinden eines externen Fachs (21) eines externen Behälters (20);
- ein Ventilsystem (4), umfassend
∘ ein erstes Ventil (4a) in einer Leitung zwischen dem Einlass (5a) der Vakuumpumpe (5) und dem Innenfach (1) und
∘ ein zweites Ventil (4b) in einer Leitung zwischen dem Einlass (5a) der Vakuumpumpe (5) und dem Verbindungsanschluss (31); **dadurch gekennzeichnet, dass** es ferner Folgendes umfasst:
- einen Regler (15), angeordnet zum Regeln der Vakuumpumpe (5) und dem Ventilsystem (4), wobei der Regler (15) programmiert ist, um selektiv in einem von einer Vielzahl von verschiedenen Modi (M1,M2,M3) betrieben zu werden, die Modi umfassend
∘ einen internen Vakuummodus (M1) zum Senken eines Drucks im Inneren (11) des Innenfachs (1), bis ein interner Lagerdruck (P1) erreicht ist; und
∘ einen externen Vakuummodus (M2) zum Senken eines Drucks im Inneren (12) des externen Fachs (21) bis ein angestrebter externer Lagerdruck (P2) erreicht ist; wobei der angestrebte externe Lagerdruck (P2) weiter unter dem Umgebungsdruck (P3) ist als der angestrebte interne Lagerdruck (P1).

2. Behälter (10) nach Anspruch 1, wobei der Verbindungsanschluss (31) einen Verbindungsdetektor zum Feststellen einer Anwesenheit (y) oder Abwesenheit (n) einer Verbindung (30) zu dem Verbindungsanschluss (31) umfasst, wobei der Regler (15) programmiert ist für
- automatisches Auslösen des externen Vakuummodus (M2), wenn die Anwesenheit (y) einer Verbindung (30) festgestellt wird; und/oder
- automatisches Auslösen des internen Vakuummodus (M1), wenn die Abwesenheit (n) einer Verbindung (30) festgestellt wird.

3. Behälter (10) nach Anspruch 1 oder 2, wobei der Verbindungsanschluss (31) einen Verbindungsdetektor zum Feststellen einer Anwesenheit (y) oder Abwesenheit (n) einer Verbindung (30) zu dem Verbindungsanschluss (31) umfasst, der Behälter (10) ferner umfassend eine extern zugängliche dynamische Benutzerschnittstelle (16) zum manuellen Kontrollieren von einem oder mehreren von einer Pumpenkapazität, einer Pumpdauer, einem periodischen Pumpschema und/oder dem angestrebten externen Lagerdruck des externen Vakuummodus (M2), wobei die Benutzerschnittstelle (16) angeordnet ist, um
- automatisch zu erscheinen, wenn die Anwesenheit (y) einer Verbindung (30) festgestellt wird; und
- automatisch zu verschwinden, wenn die Abwesenheit (n) einer Verbindung (30) festgestellt wird.

4. Behälter (10) nach einem der vorhergehenden Ansprüche, ferner umfassend einen Modusempfänger (14), betriebsfähig verbunden mit dem Regler (15) und angeordnet zum Empfangen eines Modussignals (Sm) von dem externen Behälter (20) und/oder Anschluss- (30) und/oder Verbindungspunkten (31, 32) dazwischen, wobei der Regler (15) programmiert ist, um selektiv in einem von einem ersten externen Vakuummodus (M2) oder einem zweiten externen Vakuummodus (M3) basierend auf dem empfangenen Modussignal (Sm) betrieben zu werden, wobei die ersten und zweiten externen Vakuummodi (M2,M3) sich durch einen oder mehr von einer Pumpkapazität, einer Pumpdauer, einem periodischen Pumpschema und/oder dem angestrebten externen Lagerdruck unterscheiden.

5. Behälter (10) nach einem der vorhergehenden Ansprüche, wobei
- das Ziel für den internen Lagerdruck (P1) zwischen 2 bis 30 kPa unter dem Umgebungsdruck (P3) oder zwischen 70 bis 98 kPa absoluter Druck ist; und
- das Ziel für den externen Lagerdruck (P2) zwischen 30 bis 90 kPa unter dem Umgebungsdruck (P3) oder zwischen 10 bis 70 kPa absoluter Druck ist.

6. Behälter (10) nach einem der vorhergehenden Ansprüche, wobei das Ventilsystem (4) ein drittes Ventil (4c) zwischen der externen Umgebung (13) und dem Einlass (5a) der Pumpe (5) umfasst.

7. Behälter (10) nach Anspruch 6, umfassend einen Drucksensor (8) zum Messen des Drucks (Px) an dem Einlass (5a) der Pumpe (5) und Bereitstellen des gemessenen Drucks (Px) an den Regler (15), wobei der Regler (15) programmiert ist zum
o Schließen des zweiten Ventil (4b) und dritten Ventils (4c) und Öffnen des ersten Ventils (4a) zum Messen des internen Lagerdrucks (P1); und/oder
∘ Schließen des ersten Ventils (4a) und dritten Ventils (4c) und Öffnen des zweiten Ventils (4b) zum Messen des externen Lagerdrucks (P2); und/oder
∘ Schließen des ersten Ventils (4a) und zweiten Ventils (4b) und Öffnen des dritten Ventils (4c) zum Messen des Umgebungsdrucks (P3) und
- wobei der Regler (15) programmiert ist zum Berechnen eines Druckunterschieds zwischen den gemessenen Drücken (P1,P2,P3).

8. Behälter (10) nach einem der vorhergehenden Ansprüche, umfassend ein viertes Ventil (41) zwischen dem Innenfach (1) und der externen Umgebung (13) zur Druckbeaufschlagung des Inneren (11) des Innenfachs (1) auf den Umgebungsdruck (P3) zum Auslösen des externen Zugangs zu dem Inneren (11) des Innenfachs (1).

9. Behälter (10) nach einem der vorhergehenden Ansprüche, umfassend eine Abdeckung (2), betriebsfähig zwischen
∘ einer geschlossenen Position (2a) zur hermetischen Abdichtung des Produkts im Inneren (11) des Innenfachs (1) auf den internen Lagerdruck (P1) unter den Umgebungsdruck (P3) und
∘ einer offenen Position (2b) für den Zugang zum Produkt im Inneren (11) des Innenfachs (1); und
- einen Schließsensor (9) zum Feststellen des Schließens der Abdeckung (2), wobei der Regler programmiert ist, um automatisch den internen Vakuummodus (M1) auszulösen, wenn das Schließen der Abdeckung (2) von dem Schließsensor (9) festgestellt wird.

10. Behälter (10) nach Anspruch 8 und 9, umfassend einen Öffnungssensor (7) zum Feststellen und/oder Auslösen des Öffnens (Uo) der Abdeckung (2), wobei der Regler (15) programmiert ist, um automatisch die Vakuumpumpe (5) zu stoppen und das vierte Ventil (41) zu öffnen, wenn das Öffnen (Uo) der Abdeckung (2) von dem Öffnungssensor (7) festgestellt und/oder ausgelöst wird.

11. Behälter (10) nach einem der vorhergehenden Ansprüche, wobei in dem internen Vakuummodus (M1) die Vakuumpumpe (5) eine niedrigere Pumpkapazität (S1) verwendet als der externe Vakuummodus (M2).

12. Behälter (10) nach einem der vorhergehenden Ansprüche, wobei der interne Vakuummodus (M1) Folgendes umfasst:
- eine Anfangsphase (M1a) zum Senken des Drucks in dem Fach (1) von dem Umgebungsdruck (P3) auf einen Zwischendruck (P1i) zwischen dem Umgebungsdruck (P3) und dem angestrebten internen Lagerdruck (P1); und
- einer Folgephase (M1b) zum Senken des Drucks von dem Zwischendruck (P1i) auf den angestrebten internen Lagerdruck (P1), wobei die Vakuumpumpe (5) eine höhere Pumpkapazität in der Anfangsphase (M1a) als in der Folgephase (M1b) verwendet.

13. Behälter (10) nach Anspruch 12, umfassend eine Rückmeldevorrichtung zum Bereitstellen von einem oder mehr von einem hörbaren oder visuellen Rückmeldesignal, wobei der Regler (15) programmiert ist, um die Rückmeldevorrichtung zum Bereitstellen des Rückmeldesignals zwischen der Anfangsphase (M1a) und der Folgephase (M1b) zu aktivieren.

14. Verfahren zur Verzögerung des Verderbens eines verzehrbaren Produkts mittels einer Niederdruckumgebung, das Verfahren umfassend
- das Bereitstellen eines Behälters (10) nach einem der Ansprüche 1-13,
- das Lagern des Produkts in dem Innenfach (12) des Behälters (10); und
- das Aktivieren des internen Vakuummodus (M1) zum Senken eines Drucks im Inneren (11) des Innenfachs (1) bis der angestrebte interne Lagerdruck (P1) erreicht ist.

15. Verfahren zur Verzögerung des Verderbens eines verzehrbaren Produkts mittels einer Niederdruckumgebung, das Verfahren umfassend
- das Bereitstellen eines Behälters (10) nach einem der Ansprüche 1-13;
- das Bereitstellen eines weiteren externen Behälters (20);
- das Lagern des Produkts in einem Fach (12) des externen Behälters (20);
- das Verbinden des externen Behälters (20) mit dem Verbindungsanschluss (31) des ersten Behälters (10); und
- das Aktivieren des externen Vakuummodus (M2) zum Senken eines Drucks im Inneren (13) des externen Fachs (21) bis der angestrebte externe Lagerdruck (P2) erreicht ist.

## Revendications

1. Récipient (10) pour retarder l'altération d'un produit consommable au moyen d'un environnement à basse pression, le récipient (10) comprenant :
un compartiment interne (1) pour stocker le produit à l'intérieur (11) ;
une pompe à vide (5) comprenant une entrée (5a), dans lequel la pompe est agencée pour faire baisser une pression (Px) au niveau de l'entrée (5a) au-dessous d'une pression ambiante (P3) d'un environnement externe (13) du récipient (10) ;
un orifice de raccordement (31) accessible depuis l'extérieur du récipient (10) pour raccorder un compartiment externe (21) d'un récipient externe (20) ;
un système de valves (4) comprenant :
une première valve (4a) dans un conduit entre l'entrée (5a) de la pompe à vide (5) et le compartiment interne (1), et
une deuxième valve (4b) dans un conduit entre l'entrée (5a) de la pompe à vide (5) et l'orifice de raccordement (31) ; **caractérisé en ce qu'**il comprend en outre :
un organe de commande (15) agencé pour commander la pompe à vide (5) et le système de valves (4), dans lequel l'organe de commande (15) est programmé pour fonctionner sélectivement dans l'un d'une pluralité de différents modes (M1, M2, M3), les modes comprenant :
un mode de vide interne (M1) pour faire baisser une pression à l'intérieur (11) du compartiment interne (1) jusqu'à ce qu'une pression de stockage interne cible (P1) soit atteinte ; et
un mode de vide externe (M2) pour faire baisser une pression à l'intérieur (12) du compartiment externe (21) jusqu'à ce qu'une pression de stockage externe cible (P2) soit atteinte ; dans lequel la pression de stockage externe cible (P2) est davantage inférieure à la pression ambiante (P3) que la pression de stockage interne cible (P1).

2. Récipient (10) selon la revendication 1, dans lequel l'orifice de raccordement (31) comprend un détecteur de raccordement pour détecter une présence (y) ou l'absence (n) d'un raccordement (30) par rapport à l'orifice de raccordement (31), dans lequel l'organe de commande (15) est programmé pour :
déclencher automatiquement le mode de vide externe (M2) lorsque la présence (y) d'un raccordement (30) est détectée ; et/ou
déclencher automatiquement le mode de vide interne (M1) lorsque l'absence (n) d'un raccordement (30) est détectée.

3. Récipient (10) selon la revendication 1 ou 2, dans lequel l'orifice de raccordement (31) comprend un détecteur de raccordement pour détecter une présence (y) ou l'absence (n) d'un raccordement (30) par rapport à l'orifice de raccordement (31), le récipient (10) comprenant en outre une interface utilisateur dynamique accessible de l'extérieur (16) pour commander manuellement un ou plusieurs parmi une capacité de pompe, une durée de pompe, un procédé de pompage intermittent et/ou la pression de stockage externe cible du mode de vide externe (M2), dans lequel l'interface utilisateur (16) est agencée pour :
apparaître automatiquement lorsque la présence (y) d'un raccordement (30) est détectée ; et
disparaître automatiquement lorsque l'absence (n) d'un raccordement (30) est détectée.

4. Récipient (10) selon l'une quelconque des revendications précédentes, comprenant en outre un récepteur de mode (14) raccordé, de manière opérationnelle, à l'organe de commande (15) et agencé pour recevoir un signal de mode (Sm) du récipient externe (20) et/ou du connecteur (30) et/ou des points de raccordement (31, 32) entre eux, dans lequel l'organe de commande (15) est programmé pour fonctionner, sélectivement, dans l'un parmi un premier mode de vide externe (M2) ou un second mode de vide externe (M3) en fonction du signal de mode (Sm) reçu, dans lequel les premier et second modes de vide externe (M2, M3) sont distingués par un ou plusieurs parmi une capacité de pompe, une durée de pompe, un procédé de pompage intermittent et/ou la pression de stockage externe cible.

5. Récipient (10) selon l'une quelconque des revendications précédentes, dans lequel :
la cible pour la pression de stockage interne (P1) est comprise entre 2 et 30 kPa au-dessous de la pression ambiante (P3) ou bien entre 70 et 98 kPa de la pression absolue ; et
la cible pour la pression de stockage externe (P2) est comprise entre 30 et 90 kPa au-dessous de la pression ambiante (P3) ou entre 10 et 70 kPa de la pression absolue.

6. Récipient (10) selon l'une quelconque des revendications précédentes, dans lequel le système de valves (4) comprend une troisième valve (4c) entre l'environnement externe (13) et l'entrée (5a) de la pompe (5).

7. Récipient (10) selon la revendication 6, comprenant un capteur de pression (8) pour mesurer la pression (Px) à l'entrée (5a) de la pompe (5) et fournir la pression (Px) mesurée à l'organe de commande (15), dans lequel l'organe de commande (15) est programmé pour :
fermer la deuxième valve (4b) et la troisième valve (4c) et ouvrir la première valve (4a) pour mesurer la pression de stockage interne (P1) ; et/ou
fermer la première valve (4a) et la troisième valve (4c) et ouvrir la deuxième valve (4b) pour mesurer la pression de stockage externe (P2) ; et/ou
fermer la première valve (4a) et la deuxième valve (4b) et ouvrir la troisième valve (4c) pour mesurer la pression ambiante (P3) ; et
dans lequel l'organe de commande (15) est programmé pour calculer une différence de pression entre les pressions mesurées (P1, P2, P3).

8. Récipient (10) selon l'une quelconque des revendications précédentes, comprenant une quatrième valve (41) entre le compartiment interne (1) et l'environnement externe (13) pour mettre sous pression l'intérieur (11) du compartiment interne (1) à la pression ambiante (P3) afin de déclencher l'accès externe à l'intérieur (11) du compartiment interne (1).

9. Récipient (10) selon l'une quelconque des revendications précédentes, comprenant un couvercle (2) pouvant être actionné entre :
une position fermée (2a) pour sceller hermétiquement le produit à l'intérieur (11) du compartiment interne (1) à la pression de stockage interne (P1) au-dessous de la pression ambiante (P3), et
une position ouverte (2b) pour avoir accès au produit à l'intérieur (11) du compartiment interne (1) ; et
un capteur de fermeture (9) pour détecter la fermeture du couvercle (2), dans lequel l'organe de commande est programmé pour déclencher automatiquement le mode de vide interne (M1) lorsque la fermeture du couvercle (2) est détectée par le capteur de fermeture (9).

10. Récipient (10) selon les revendications 8 et 9, comprenant un capteur d'ouverture (7) pour détecter et/ou déclencher l'ouverture (Uo) du couvercle (2), dans lequel l'organe de commande (15) est programmé pour arrêter automatiquement la pompe de vide (5) et ouvrir la quatrième valve (41) lorsque l'ouverture (Uo) du couvercle (2) est détectée et/ou déclenchée par le capteur d'ouverture (7).

11. Récipient (10) selon l'une quelconque des revendications précédentes, dans lequel, dans le mode de vide interne (M1), la pompe à vide (5) utilise une capacité de pompe (S1) inférieure à celle utilisée dans le mode de vide externe (M2).

12. Récipient (10) selon l'une quelconque des revendications précédentes, dans lequel le mode de vide interne (M1) comprend :
une phase initiale (M1a) pour faire baisser la pression dans le compartiment (1), de la pression ambiante (P3) à une pression intermédiaire (P1i) entre la pression ambiante (P3) et la pression de stockage interne cible (P1) ; et
une phase successive (M1b) pour faire baisser la pression de la pression intermédiaire (P1i) à la pression de stockage interne cible (P1), dans lequel la pompe de vide (5) utilise une capacité de pompe supérieure dans la phase initiale (M1a) à celle utilisée dans la phase successive (M1b).

13. Récipient (10) selon la revendication 12, comprenant un dispositif de rétroaction pour fournir un ou plusieurs parmi un signal de rétroaction audio ou visuel, dans lequel l'organe de commande (15) est programmé pour activer le dispositif de rétroaction afin de fournir le signal de rétroaction entre la phase initiale (M1a) et la phase successive (M1b).

14. Procédé pour retarder l'altération d'un produit consommable au moyen d'un environnement à basse pression, le procédé comprenant les étapes consistant à :
prévoir un récipient (10) selon l'une quelconque des revendications 1 à 13 ;
stocker le produit dans le compartiment interne (12) du récipient (10) ; et
activer le mode de vide interne (M1) pour faire baisser une pression à l'intérieur (11) du compartiment interne (1) jusqu'à ce que la pression de stockage interne cible (P1) soit atteinte.

15. Procédé pour retarder l'altération d'un produit consommable au moyen d'un environnement à basse pression, le procédé comprenant les étapes consistant à :
prévoir un récipient (10) selon l'une quelconque des revendications 1 à 13 ;
prévoir un autre récipient externe (20) ;
stocker le produit dans un compartiment (12) du récipient externe (20) ;
raccorder le récipient externe (20) à l'orifice de raccordement (31) du premier récipient (10) ; et
activer le mode de vide externe (M2) pour faire baisser une pression à l'intérieur (13) du compartiment externe (21) jusqu'à ce que la pression de stockage externe cible (P2) soit atteinte.
